# EUROPEAN PATENT SPECIFICATION

(11) **EP 3 637 251 B1**
(45) Date of publication and mention of the grant of the patent: **04.10.2023**
(21) Application number: 17909984.1
(22) Date of filing: 31.08.2017
(51) Int. Cl.: G06F 9/445, G06F 8/65

(54) **METHOD, DEVICE AND TERMINAL FOR EXECUTING HOTPATCH**
VERFAHREN, VORRICHTUNG UND ENDGERÄT ZUR AUSFÜHRUNG EINES HOTPATCH
PROCÉDÉ, DISPOSITIF ET TERMINAL D'EXÉCUTION D'UN CORRECTIF À CHAUD

(30) Priority: 17.05.2017 CN 201710349599
(43) Date of publication of application: 15.04.2020
(73) Proprietor: Huawei Technologies Co., Ltd., Longgang District Shenzhen, Guangdong 518129 (CN)
(72) Inventor: XIE, Xiaoling, Shenzhen Guangdong 518129 (CN); LU, Jianhai, Shenzhen Guangdong 518129 (CN); CHEN, Xiaoxuan, Shenzhen Guangdong 518129 (CN); LU, Shoudong, Shenzhen Guangdong 518129 (CN); YANG, Xiao, Shenzhen Guangdong 518129 (CN); ZHU, Hua, Shenzhen Guangdong 518129 (CN); YUE, Yi, Shenzhen Guangdong 518129 (CN)
(74) Representative: Maiwald GmbH
(86) International application number: PCT/CN2017/100081
(87) International publication number: WO 2018/209843

(56) References cited:
- WO-A1-2017/026739
- WO-A2-2011/074980
- CN-A- 104 951 335
- CN-A- 105 630 557
- CN-A- 106 020 893
- CN-A- 106 066 686
- CN-A- 106 406 940
- US-A1- 2018 157 808
- US-A1- 2019 294 510
- Sebastian Schleemilch: "Research and Analysis of Copy Protection Mechanisms for Android Apps, as well as Implementing a Sample Application", , 15 April 2016 (2016-04-15), XP055554984, Retrieved from the Internet: URL:https://www.os.in.tum.de/fileadmin/w00 bdp/www/Lehre/Abschlussarbeiten/MA_Schleem ilch_Android_Copy_Protection.pdf [retrieved on 2019-02-11]

## Description

### TECHNICAL FIELD

The present invention relates to the field of communications technologies, and in particular, to a hot patch execution method and apparatus and a terminal.

### BACKGROUND

To provide a better application use effect for a user, an application developer usually fixes an application or adds or improves a corresponding function based on a user requirement. An Android system is used as an example. A conventional application update is as follows: An application developer releases a complete Android package (Android Package, APK) program, namely, a compressed package in a ZIP format that includes files such as an executable DEX code program, various resources, an SO library, and a layout (layout), the user may download the APK from various application markets or an official website by using a terminal, and a system of the terminal reinstalls the APK to update the application.

For an application with a relatively large compressed package, in the foregoing manner, an extremely low update speed affects use of the user. Therefore, a hot patch update is proposed in the industry, where the hot patch update is an update technology with a higher update speed in comparison with a conventional update manner. A particular feature of the hot patch update technology is that there is no need to release an independent application version separately and a user is unaware of the update. The hot patch update technology is used to fix an urgent problem of an application. A hot patch (patch) refers to some code that can fix a software vulnerability, and is a rapid and low-cost manner for fixing vulnerabilities of a product software version. For example, in the Android (android) system, the user is unaware of the fixing, and the hot patch is usually a file of executable code (or convertible code) that is obtained from a server or in another manner and that can be run in the Android system. When a code

with a higher update speed in comparison with a conventional update manner. A particular feature of the hot patch update technology is that there is no need to release an independent application version separately and a user is unaware of the update. The hot patch update technology is used to fix an urgent problem of an application. A hot patch (patch) refers to some code that can fix a software vulnerability, and is a rapid and low-cost manner for fixing vulnerabilities of a product software version. For example, in the Android (android) system, the user is unaware of the fixing, and the hot patch is usually a file of executable code (or convertible code) that is obtained from a server or in another manner and that can be run in the Android system. When a code logic and a service that need to be fixed are executed for the application, the code in the hot patch is preferentially executed to fix the problem.

CN 106 066 686 A describes a method for information processing.

WO 2017/026739 describes a method for code obfuscation of an application.

### SUMMARY

The present invention provides a hot patch execution method and apparatus and a terminal, to resolve problems such as black screen of a terminal and frame freezing of an application that are caused by an excessively long compilation time when a fixed compilation mode is used in a compilation process.

The present invention is defined by a hot patch execution method of independent claim 1, by a hot patch execution apparatus of independent claim 4, by a terminal of independent claim 6, by a computer readable medium of independent claim 7 and by a computer program product of independent claim 8. Additional features of the invention are presented in the dependent claims. In the following, parts of the description and drawing referring to embodiments, which are not covered by the claims are not presented as embodiments of the invention, but as examples useful for understanding the invention.

### BRIEF DESCRIPTION OF DRAWINGS

FIG. 1 is a schematic structural diagram of a terminal according to an embodiment of the present invention.
FIG. 2 is a schematic architectural diagram of a system according to an embodiment of the present invention;
FIG. 3 is a schematic diagram in which a display interface of a terminal is switched in a specific scenario according to an embodiment of the present invention;
FIG. 4 is a schematic diagram of a hot patch execution process of an application according to an embodiment of the present invention;
FIG. 5 is a flowchart of a hot patch execution method according to an embodiment of the present invention;
FIG. 6 is a flowchart of another hot patch execution method according to an embodiment of the present invention;
FIG. 7 is a flowchart of another hot patch execution method according to an embodiment of the present invention;
FIG. 8 is an interaction diagram of another hot patch execution method according to an embodiment of the present invention;
FIG. 9 is an interaction diagram of another hot patch execution method according to an embodiment of the present invention;
FIG. 10 is a schematic structural diagram of a hot patch execution apparatus according to an embodiment of the present invention; and
FIG. 11 is a schematic structural diagram of a terminal according to an embodiment of the present invention.

### DESCRIPTION OF EMBODIMENTS

The following describes the technical solutions in the embodiments of the present invention with reference to accompanying drawings in the embodiments of the present invention.

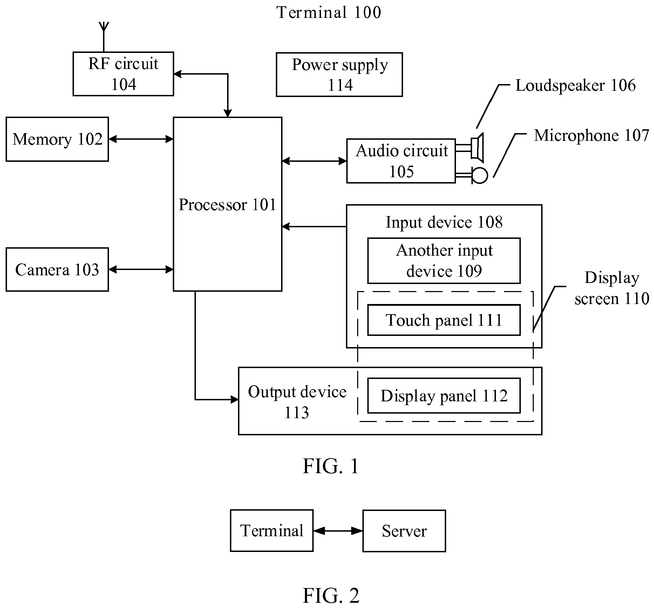

The embodiments of the present invention may be applied to terminals, and the terminals may include devices such as a notebook computer and a smartphone. The terminal has at least a display screen, an input device, and a processor. A terminal 100 is used as an example. As shown in FIG. 1, the terminal 100 includes components such as a processor 101, a memory 102, a camera 103, an RF circuit 104, an audio circuit 105, a loudspeaker 106, a microphone 107, an input device 108, another input device 109, a display screen 110, a touch panel 111, a display panel 112, an output device 113, and a power supply 114. The display screen 110 includes at least the touch panel 111 serving as an input device and the display panel 112 serving as an output device. It should be noted that a structure of the terminal shown in FIG. 1 constitutes no limitation on the terminal, and the terminal may include more or fewer components than those shown in the figure, or some components are combined, or some components are split, or a different component arrangement may be included. This is not limited herein.

The following describes components of the terminal 100 in detail with reference to FIG. 1.

The radio frequency (Radio Frequency, RF) circuit 104 may be configured to receive and send information or receive and send a signal during a call. For example, if the terminal 100 is a mobile phone, the terminal 100 may receive, by using the RF circuit 104, downlink information sent by a base station, and then transmit the downlink information to the processor 101 for processing. In addition, the terminal 100 sends related uplink data to the base station. The RF circuit usually includes but is not limited to an antenna, at least one amplifier, a transceiver, a coupler, a low noise amplifier (Low Noise Amplifier, LNA), a duplexer, and the like. In addition, the RF circuit 104 may further communicate with a network and another device through wireless communication. The wireless communication may use any communications standard or protocol, including but not limited to a global system for mobile communications (Global System of Mobile communication, GSM), a general packet radio service (General Packet Radio Service, GPRS), code division multiple access (Code Division Multiple Access, CDMA), wideband code division multiple access (Wideband Code Division Multiple Access, WCDMA), long term evolution (Long Term Evolution, LTE), an email, a short message service (Short Messaging Service, SMS), and the like.

The memory 102 may be configured to store a software program and a module. The processor 101 runs the software program and the module that are stored in the memory 101, to execute various function applications of the terminal 100 and perform data processing. The memory 101 may mainly include a program storage area and a data storage area. The program storage area may store an operating system, an application program required by at least one function (such as a sound playing function or an image playing function), and the like. The data storage area may store data (such as audio data or video data) created based on use of the terminal 100, and the like. In addition, the memory 101 may include a high-speed random access memory, and may further include a non-volatile memory, such as at least one magnetic disk storage device, a flash memory device, or another volatile solid-state storage device.

The another input device 109 may be configured to: receive entered digit or character information, and generate key signal input related to user setting and function control of the terminal 100. Specifically, the another input device 109 may include but is not limited to one or more of a physical keyboard, a function key (such as a volume control key or an on/off key), a tracking ball, a mouse, a joystick, an optical mouse (where the optical mouse is a touch-sensitive surface that does not display visual output, or an extension of a touch-sensitive surface formed by a touchscreen), and the like. The another input device 109 may further include a built-in sensor of the terminal 100, such as a gravity sensor or an acceleration sensor, and the terminal 100 may further use, as input data, a parameter detected by the sensor.

The display screen 110 may be configured to display information entered by a user or information provided for the user, and various menus of the terminal 100, and may further receive user input. In addition, the display panel 112 may be configured in a form of a liquid crystal display (Liquid Crystal Display, LCD), an organic light-emitting diode (Organic Light-Emitting Diode, OLED), or the like. The touch panel 111, also referred to as a touchscreen, a touch-sensitive screen, or the like, may collect a touch or non-touch operation (for example, an operation performed by the user on the touch panel 111 or near the touch panel 111 by using any proper object or accessory, such as a finger or a stylus, or a motion sensing operation may be included, where the operation includes an operation type such as a single-point control operation or a multi-point control operation) performed by the user on or near the touch panel, and drive a corresponding connection apparatus based on a preset program. It should be noted that the touch panel 111 may further include two parts: a touch detection apparatus and a touch controller. The touch detection apparatus detects an orientation and gesture of a touch performed by the user, detects a signal brought by a touch operation, and sends the signal to the touch controller. The touch controller receives touch information from the touch detection apparatus, converts the touch information into information that can be processed by the processor 101, and then transmits the information to the processor 101. In addition, the touch controller can further receive and execute a command sent by the processor 101. In addition, the touch panel 111 may be implemented in a plurality of types, such as a resistive, capacitive, infrared, and surface acoustic wave touch panel, or the touch panel 111 may be implemented by using any technology developed in the future. Generally, the touch panel 111 may cover the display panel 112. The user may perform, based on content displayed on the display panel 112 (where the displayed content includes but is not limited to a soft keyboard, a virtual mouse, a virtual key, an icon, and the like), an operation on or near the touch panel 111 that covers the display panel 112. After detecting the operation on or near the touch panel 111, the touch panel 111 transmits the operation to the processor 101 to determine user input, and then the processor 101 provides corresponding visual output on the display panel 112 based on the user input. In FIG. 1, the touch panel 111 and the display panel 112 serve as two independent components to implement input and output functions of the terminal 100. However, in some embodiments, the touch panel 111 and the display panel 112 may be integrated to implement the input and output functions of the terminal 100.

The RF circuit 104, the loudspeaker 106, and the microphone 107 may provide an audio interface between the user and the terminal 100. The audio circuit 105 may convert received audio data into a signal, and transmit the signal to the loudspeaker 106, and the loudspeaker 106 converts the signal into a voice signal for output. In addition, the microphone 107 may convert a collected voice signal into a signal, and the audio circuit 105 receives the signal, converts the signal into audio data, and then outputs the audio data to the RF circuit 104, to send the audio data to a device such as another terminal, or outputs the audio data to the memory 102, so that the processor 101 performs further processing with reference to content stored in the memory 102. In addition, the camera 103 may collect an image frame in real time, send the image frame to the processor 101 for processing, and store a processed result in the memory 102 and/or present a processed result to the user by using the display panel 112.

The processor 101 is a control center of the terminal 100, is connected to each part of the entire terminal 100 by using various interfaces and lines, and performs various functions of the terminal 100 and data processing by running or executing the software program and/or the module that are/is stored in the memory 102 and invoking data stored in the memory 102, to perform overall monitoring on the terminal 100. It should be noted that the processor 101 may include one or more processing units. An application processor and a modem processor may be integrated into the processor 101. The application processor mainly processes an operating system, a user interface (User Interface, UI), an application program, and the like. The modem processor mainly processes wireless communication. It may be understood that the modem processor may not be integrated into the processor 101.

The terminal 100 may further include the power supply 114 (for example, a battery) that supplies power to each component. In this embodiment of the present invention, the power supply 114 may be logically connected to the processor 101 by using a power management system, to manage functions such as charging, discharging, and power consumption by using the power management system.

In addition, there are still components not shown in FIG. 1. For example, the terminal 100 may further include a Bluetooth module, a near field communication (Near Field Communication, NFC) module, a wireless fidelity (Wireless-Fidelity, Wi-Fi) module, a global positioning system (global positioning system, GPS) module, a loudspeaker, an accelerometer, a gyroscope, and the like. Details are not described herein. The Bluetooth module may be used by the mobile phone to establish, within a specific distance (within a distance specified by the Bluetooth Protocol), a Bluetooth connection to and bidirectionally communicate with another device that supports a Bluetooth function. The NFC module may be used by the mobile phone to establish an NFC connection to and bidirectionally communicate with another device that supports NFC communication. The terminal 100 may establish a Wi-Fi connection by using the Wi-Fi module and perform data transmission.

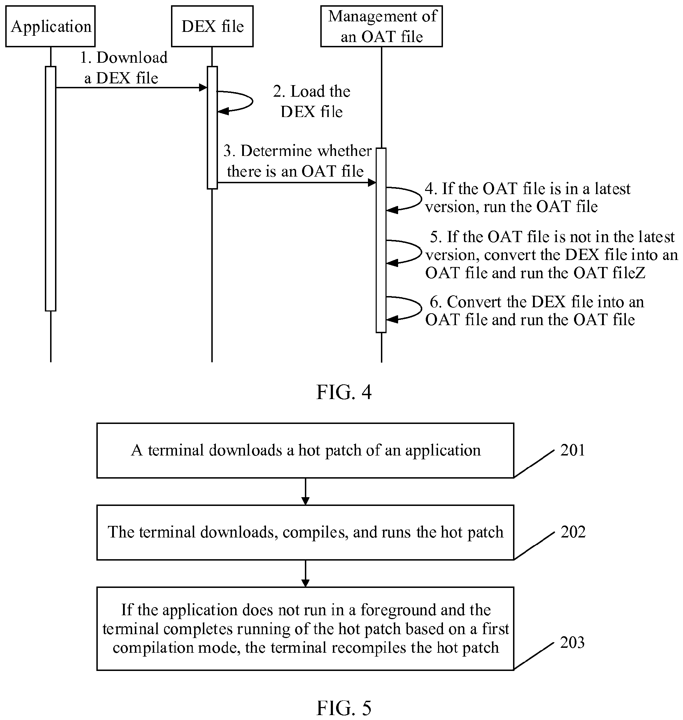

For an application, when the application is in a non-foreground running state, the terminal may detect, through networking, whether there is a hot patch for the application. If there is the hot patch, the hot patch is executed after being downloaded. For a specific implementation, refer to an implementation procedure shown in FIG. 4.

The embodiments of the present invention may be applied to a system. As shown in FIG. 2, the system includes not only the terminal shown in FIG. 1, but also at least a server. The terminal and the server may exchange data. For example, the terminal may obtain content such as a configuration file and a hot patch from the server, and the server may obtain the hot patch and parameters such as a size and a load time of the hot patch from the terminal. It should be noted that there may be at least one server. For example, when there are a plurality of servers, the terminal may obtain a configuration file from one server, and obtain a hot patch from another server. An interaction procedure between the terminal and the server and transmission content related to the interaction procedure are described below. Details are not described herein.

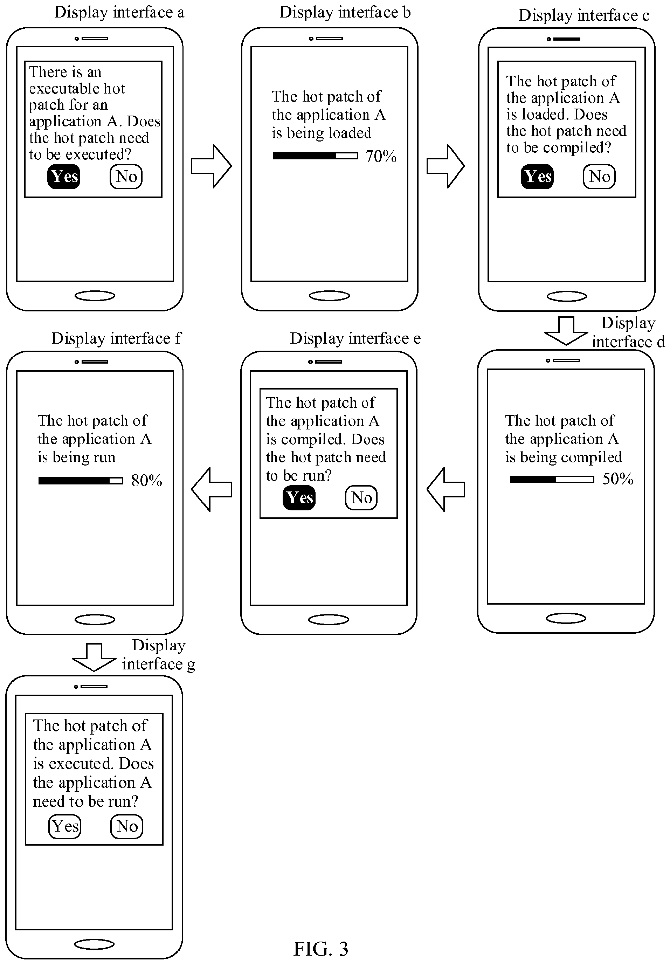

To facilitate understanding of the technical solutions described in the embodiments of the present invention, key terms, acronyms and abbreviations, and the like in the embodiments of the present invention are described herein. Details are as follows:
A hot patch execution process includes loading, compilation, and running of a hot patch. If an application runs in a foreground, after the hot patch is compiled, a compiled OAT file is directly run. If the application does not run in the foreground, after the hot patch is compiled, a compiled OAT file may be directly run, or the compiled OAT file is run after the application runs in the foreground again. It should be noted that, for a hot patch execution process that can be perceived by a user, as shown in FIG. 3, a display interface a to a display interface g of a terminal are displayed in sequence as indicated by arrow directions. A dialog box may be presented on the display interface of the terminal to query the user whether to execute a hot patch of an application A. If the user selects "Yes" through an operation such as tapping or sliding, it is considered that the user currently needs to execute the hot patch of the application A. In this case, the display interface a of the terminal may be switched to the display interface b. To be specific, loading progress of the hot patch is presented. In terms of a specific presentation form, the loading progress may be presented to the user in real time by using a dynamically changing progress bar, and/or a percentage indicating loading completion is displayed, so that the loading progress is presented to the user in a more intuitive manner. Certainly, there may be another presentation form. It should be noted that processing progress presented on the display interfaces b, d, and f may be optionally presented to the user. For example, for processes with a relatively long processing time, the user may be informed of processing progress in real time in the manner in which processing progress is presented. In this way, cases in which the user selects to exit a hot patch execution process due to an excessively long waiting time are greatly reduced. Certainly, in the embodiments of the present invention, if the terminal does not present the display interface of the processing progress to the user, after a specific process is completed, the terminal may directly inform, through ringing or by using a voice prompt or a text prompt, the user that the current process is completed and a next process is to be started. After the hot patch of the application A is loaded, a dialog box may also be popped up on the terminal to query the user whether to compile the loaded hot patch. After the compilation is completed, the user is queried whether to run the hot patch. In addition, after the hot patch is executed, a dialog box is popped up to query the user whether to directly switch to an access interface of the application A. It should be noted that, after the hot patch is loaded, the terminal may directly perform a compilation and running process of the hot patch. In this process, there is no need to query user requirements, and processing progress of each current process may be optionally presented to the user. Certainly, to bring better user experience to the user and avoid inconvenience that is brought to the user because a dialog box for triggering a next process is popped up a plurality of times, in the embodiments of the present invention, the terminal may alternatively request the user to confirm a plurality of operation suggestions at a time in a single query process. For example, a dialog box is popped up on the terminal to separately query the user whether to compile the hot patch, and whether the hot patch is directly run after it is determined that the hot patch needs to be compiled and the compilation is completed, and the like. The foregoing implementation procedure is merely a possible implementation solution. For a hot patch execution process that is not perceived by the user, no content needs to be presented to the user on the display interface of the terminal. In addition, in the hot patch execution process that is perceived by the user, for specific content presented on the terminal at each stage, refer to content actually presented in a current hot patch execution process. In the embodiments of the present invention, content presented on the display interface may not be changed. In addition, for a hot patch compilation process in which two different compilation modes are used that is mentioned in the embodiments of the present invention, if corresponding content needs to be presented on the display interface in an original compilation process, in this case, it may be considered that the terminal separately presents, to the user at two different time points, corresponding data, such as compilation progress, generated by compiling a hot patch in two different compilation modes. This is not limited herein.

The loading of the hot patch is storing the downloaded hot patch in a memory. The compilation of the hot patch is converting a DEX file stored in the memory into machine code, such as an OAT file, that can be run. The running of the hot patch is running the compiled OAT file. It should be noted that the DEX file and the OAT file are used as an example for description in the embodiments of the present invention, and the hot patch may alternatively be a file in another format. This is not limited herein.

Compared with foreground running, non-foreground running includes a case in which the application is in a background running state, and certainly, may also include a case in which the terminal is in an idle state or a standby state, which are not listed one by one herein. When the terminal is in the idle state, it may be considered that the terminal has sufficient idle resources for supporting the compilation of the hot patch.

For the user, the application running in the foreground is an application corresponding to an interface that is currently presented by a display screen of the terminal to the user.

The hot patch is delivered by using a server and used to fix a problem for a specific application version. The hot patch may be directly in a program format, such as a DEX package, that can be recognized and loaded by an Android system, or may be in some formats customized by the application. However, in a loading process, various types of conversion is performed on the application to obtain a DEX format that can be recognized, loaded, and run by the system. Herein, DEX is a package format of program code that can be executed in the Android system. In the embodiments of the present invention, the hot patch may be considered as executable code that is downloaded by the application separately, or another file that can be converted into executable code. In the embodiments of the present invention, an example in which the hot patch is a DEX file is used for description, but this imposes no limitation on an implementation form of the hot patch.

An OAT file is a private ELF file format of the Android system, and the OAT file includes not only a local machine instruction obtained by translating the DEX file but also content in the original DEX file.

An android runtime (android runtime, art) virtual machine and a Dalvik virtual machine (Dalvik Virtual Machine, DVM) are both virtual machines used in Android. A difference between the virtual machines is that in an application installation process, a DEX file is precompiled to obtain machine code, and the machine code is directly run during running. For the Dalvik virtual machine, all Android programs run in an Android system process, each process is corresponding to a Dalvik virtual machine instance, and a DEX file of an application is interpreted and executed during running.

FIG. 4 is a schematic diagram of a hot patch execution process of an application.

Step 1: Download a DEX file.

It should be noted that a DEX file of an application is downloaded regardless of whether the application is in a foreground running state or a non-foreground running state. Generally, to avoid affecting normal use of the application, the DEX file is usually downloaded only when the application is in the non-foreground running state, to ensure that sufficient resources are available when the application is in the foreground running state.

Step 2: Load the DEX file.

After the DEX file is downloaded, to facilitate subsequent compilation and running of the DEX file, the downloaded DEX file needs to be loaded into a memory in this embodiment of the present invention.

Step 3: Determine whether there is an OAT file. If there is the OAT file, step 4 or step 5 is performed. If there is no OAT file, step 6 is performed.

Step 4: If the OAT file is in a latest version, run the OAT file.

Step 5: If the OAT file is not in the latest version, convert the DEX file into an OAT file and run the OAT file.

Step 6: Convert the DEX file into an OAT file and run the OAT file.

A generated OAT file may not be an OAT file in the latest version when the application is installed on a terminal for the first time, the terminal is upgrading, the terminal is just powered on, or the like. In this case, if the existing OAT file is still run, a hot patch cannot be executed successfully. In consideration of the foregoing case, as shown in FIG. 4, after the DEX file is loaded, it is necessary to determine not only whether there is an OAT file but also whether the OAT file is in the latest version when there is the OAT file. For an OAT file that is not in the latest version, in this embodiment of the present invention, the loaded DEX file needs to be recompiled, to be specific, the DEX file is converted into the OAT file in the latest version, and then the OAT file is run.

The OAT file in the latest version may be generated by using dex2oat. However, this manner imposes no limitation on this embodiment of the present invention. The DEX file may be converted into the OAT file in the latest version in another manner.

It should be noted that, to ensure that the running OAT file is the OAT file in the latest version, steps 3 to 6 are necessary. However, in a currently used compilation mode, a long time is usually consumed in step 6. As a result, user experience deteriorates because of phenomena such as black screen of the terminal and frame freezing of an application that are caused by an excessively long compilation time.

An Android system is used as an example. When a DEX file of a hot patch is loaded into the Android system in which an android runtime (android runtime, art) virtual machine is used, an invoked interface is loadDex, the loading manner is referred to as forced-dexopt, and a used compilation mode is a speed compilation mode. The speed compilation mode is a mode of full compilation to machine code. A feature of the compilation mode is that a compilation time is increased because a generated OAT file is relatively large, but a time consumed for running a program is relatively short.

It can be learned that problems such as black screen of the terminal and frame freezing of the application are caused by an excessively long compilation time when a fixed compilation mode is used in a compilation process. Therefore, in the embodiments of the present invention, an original manner in which a single compilation mode is used for a hot patch is changed, and after an application is switched from foreground running to non-foreground running, another compilation mode is used to compile and run the hot patch, to improve a speed of compiling the hot patch and ensure or improve a speed of running the compiled hot patch.

The present invention provides a hot patch execution method. As shown in FIG. 5, the method may be performed by the terminal 100 shown in FIG. 1, and the method includes the following steps.

Step 201: A terminal downloads a hot patch of an application.

Based on a user requirement or a preconfiguration, the terminal may complete downloading of the hot patch from a platform or website similar to an application store and the like, and then load, compile, and run the hot patch in a first compilation mode.

Step 202: The terminal loads, compiles, and runs the hot patch.

The compilation is performing format conversion of the hot patch in the first compilation mode.

The first compilation mode is different from a compilation mode used in the prior art. In this embodiment of the present invention, the compilation mode used in the prior art may be considered as a second compilation mode mentioned below. Certainly, the second compilation mode may be a compilation mode with a relatively high running speed other than the compilation mode used in the prior art. Similarly, the first compilation mode may be another compilation mode with a relatively high compilation speed, and a specific compilation mode is not limited herein. It should be noted that, in the prior art, because an OAT file is relatively large and a compilation time is excessively long, the hot patch is usually stuck for a long time in a compilation process, and consequently, user experience deteriorates because of phenomena such as black screen of the terminal and frame freezing of the application. To further resolve the foregoing problems, in this embodiment of the present invention, a time for compiling the hot patch based on the first compilation mode is shorter than a time for compiling the hot patch based on the second compilation mode, and a time for running the hot patch based on the first compilation mode is longer than a time for running the hot patch based on the second compilation mode. Because the time for compiling the hot patch in the first compilation mode is shorter than the time for compiling the hot patch in the second compilation mode, the compiled hot patch obtained after format conversion is completed in the first compilation mode has simple content, but the compiled hot patch obtained after format conversion is completed in the second compilation mode has complex content, and the content is more specific and easy to run in comparison with the previous case. It can be learned that, for a same hot patch, different compilation duration affects details of content in the compiled hot patch, and further affects complexity of a subsequent running process.

The compilation mode is a mode in which a DEX file is executed, such as an interpret-only mode, a speed mode, and a speed-profile mode, which are not listed one by one herein. A compilation speed in the interpret-only mode is relatively high, but a speed of running a program after the compilation is completed is relatively low. The speed mode is a mode of full compilation to machine code, and in the compilation mode, a compilation time is long and a generated OAT file is relatively large, but a time consumed for running a program is relatively short. The speed-profile mode is a mode in which some hotspot methods are compiled to machine code. It should be noted that, in addition to the interpret-only mode, modes with a relatively high compilation speed further include a verify-none mode, a verify-at-runtime mode, and the like.

Step 203: If the application does not run in a foreground and the terminal completes running of the hot patch based on the first compilation mode, the terminal recompiles the hot patch.

The recompilation is performing format conversion of the hot patch in the second compilation mode.

It should be noted that, if the application does not run in the foreground, it may be considered that the application is in the non-foreground running state described above. In other words, after the application is switched back to the foreground running state from the non-foreground running state, the hot patch is still compiled in the second compilation mode, or after the compilation is completed in the second compilation mode, the compiled hot patch is directly run when the application runs in the foreground. Certainly, based on a user requirement or an indication in another instruction, the hot patch may be directly run after being compiled in the second compilation mode in the background.

For hot patches executed in the first compilation mode, if compilation of the hot patches and running of some hot patches are completed in the first compilation mode when the application is run in the foreground, after the application is switched to the non-foreground running state, in consideration of a case in which running of the other hot patches is not completed in the first compilation mode, running of the other hot patches needs to be completed before the hot patches are recompiled in the second compilation mode. If only compilation of the hot patches is completed in the first compilation mode but the compiled hot patches are not run when the application is run in the foreground, after the application is switched to the non-foreground running state, although the compiled hot patches are not run in this case, running of the hot patches needs to be completed before the hot patches are compiled in the second compilation mode in this embodiment of the present invention. The foregoing example is provided merely as a possible implementation, and is not intended to limit the embodiments of the present invention. Certainly, cases that may occur in the embodiments of the present invention include more than the foregoing two cases.

With reference to the foregoing examples, it can be learned that, no matter which implementation is used, after a running status of the application is finally switched back to the foreground running state, if the compilation of the hot patch is not completed in the second compilation mode, the compilation of the hot patch is still performed in the second compilation mode after the application returns back to foreground running.

Compared with a case in which user experience deteriorates because of phenomena such as black screen of the terminal and frame freezing of the application that are caused by an excessively long compilation time in a prior-art process in which the hot patch is executed in a single compilation mode, in this embodiment of the present invention, a compilation mode is adjusted with reference to a running status of the application, so that the hot patch is compiled in different compilation modes when the application is in different running statuses. To be specific, the hot patch is first loaded, compiled, and run based on the first compilation mode, and after the application is switched from the foreground running state to the non-foreground running state, the hot patch that has been loaded, compiled, and run in the first compilation mode is compiled in the second compilation mode. In this way, in a process of compiling the hot patch in the foreground, because the time for compiling the hot patch in the first compilation mode is shorter than the time for compiling the hot patch in the second compilation mode, a compilation time of the hot patch can be effectively reduced. In a process of running the hot patch, because a speed of running the hot patch in the second compilation mode is greater than a speed of running the hot patch in the first compilation mode, after the application is switched to the non-foreground running state, a time of running a program is optimized in a compilation manner with a relatively high running speed, and the user is unaware of the compilation. It can be learned that completing execution of the hot patch in a plurality of compilation modes can not only shorten a time consumed for compiling the hot patch in the foreground, but also ensure the time of running the program. Therefore, phenomena such as black screen of the terminal and frame freezing of the application that are caused by an excessively long compilation time are reduced, running of a subsequent program is not affected, and user experience is improved.

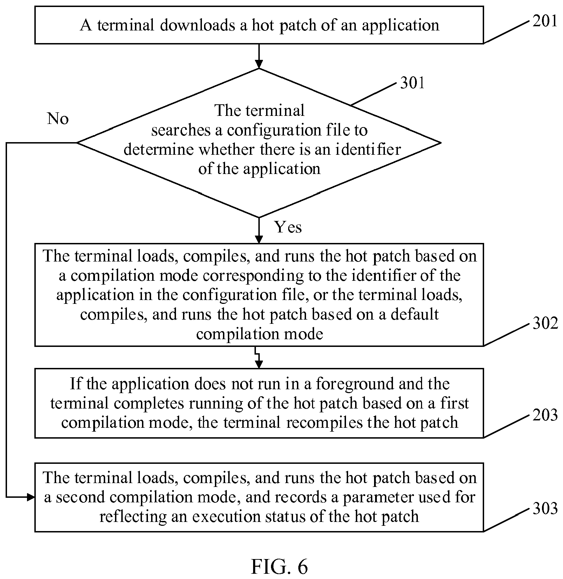

A same hot patch may be repeatedly compiled in different compilation modes when the hot patch is executed in a manner in which compilation modes are switched. However, some hot patches are extremely small, and even if the hot patches are compiled and run in the compilation mode in the prior art, no excessively long time is wasted in completing compilation and running of the hot patches. In consideration of the foregoing case, in a possible implementation of this embodiment of the present invention, hot patches of some applications, a specific hot patch, or some hot patches instead of all hot patches may be executed in the manner in which compilation modes are switched. Therefore, based on the implementation shown in FIG. 5, an implementation shown in FIG. 6 may be further implemented. Before the terminal loads, compiles, and runs the hot patch in step 202, step 301 may be further performed, step 202 may be implemented as step 302, and step 302 or step 303 may be performed based on a determining result obtained after step 301 is performed.

Step 301: The terminal searches a configuration file to determine whether there is an identifier of the application. If there is the identifier of the application in the configuration file, step 302 is performed. If there is not the identifier of the application in the configuration file, step 303 is performed.

The configuration file includes at least an identifier of an application for which a hot patch needs to be compiled and run in a rapid compilation mode, and a first compilation mode is the rapid compilation mode. It should be noted that the foregoing rapid compilation mode is a compilation mode with a relatively high loading and compiling speed.

The configuration file may be a local file that is pre-stored in the terminal, or a file that is directly obtained from a device such as a server or a terminal by using communication methods such as a network and Bluetooth when the terminal needs the configuration file, or a file obtained by the terminal from a cloud. A source of the configuration file is not limited herein. In addition, content in the configuration file may be set by a technician based on a historical empirical value, for example, a hot patch of a specific type of application or a hot patch of a specific application is set to be executed by using the implementation provided in this embodiment of the present invention, or a type of a hot patch is used as a basis for distinguishing between compilation manners. Alternatively, content in the configuration file may be determined with reference to feedback information of a user, for example, a use evaluation of the user for an application. A manner of determining the content in the configuration file is not limited herein.

Application identifiers are used to distinguish between different applications, and may be particular characters or character strings. This is not limited herein. It should be noted that an application identifier may occupy a plurality of bits, and the terminal may distinguish between types of applications based on a preset rule and some or all of the bits in the application identifier, and then a hot patch is executed for a specific type of application by using the implementation provided in this embodiment of the present invention. Certainly, a hot patch may be executed for a specific application by using the implementation provided in this embodiment of the present invention. This is not limited herein.

Step 302: The terminal loads, compiles, and runs the hot patch based on a compilation mode corresponding to the identifier of the application in the configuration file, or the terminal loads, compiles, and runs the hot patch based on a default compilation mode.

In addition to the identifier of the application, the compilation mode that needs to be used for the hot patch of the application in an execution process may be further recorded in the configuration file. If only the identifier of the application is recorded in the configuration file, the hot patch may be executed in the default compilation mode. The default compilation mode is one of rapid compilation modes, and the default compilation mode may be pre-configured in the terminal, or a corresponding rule may be preset, so that the corresponding rule is invoked when the terminal needs to execute the hot patch. This is not limited herein. If the identifier of the application and the compilation mode corresponding to the identifier are recorded in the configuration file, the hot patch may be directly executed in the compilation mode recorded in the configuration file. It should be noted that different identifiers may be corresponding to a same compilation mode or different compilation modes. This is not limited herein.

In addition, regardless of whether the application is currently in a foreground running state or a non-foreground running state, a hot patch that needs to be executed for a first time needs to be loaded, compiled, and run in the first compilation mode (namely, the default compilation mode or the compilation mode recorded in the configuration file).

Step 303: The terminal loads, compiles, and runs the hot patch based on a second compilation mode, and records a parameter used for reflecting an execution status of the hot patch.

The parameter includes at least one of a size and a load time of the hot patch.

In this embodiment of the present invention, to provide better experience for a user, the configuration file may also be changed after being determined, and may be subsequently adjusted with reference to the execution status of the hot patch. Therefore, for a hot patch that currently does not need to be executed in a manner in which compilation modes are switched, parameters used for reflecting an execution status of the hot patch needs to be recorded when the hot patch is being executed or after execution of the hot patch is completed. The recorded parameters may be subsequently used to analyze the execution status of the hot patch, so that the configuration file can be subsequently updated.

It should be noted that, for a hot patch executed in the manner in which compilation modes are switched, if resources are sufficient, a parameter used for reflecting an execution status of the hot patch may also be recorded. The parameter herein may further include times consumed for compiling the hot patch in different compilation modes, and the like. This is not limited herein. In addition, the foregoing resource may be storage space of the terminal, a resource that affects a load status, or the like. This is not limited herein.

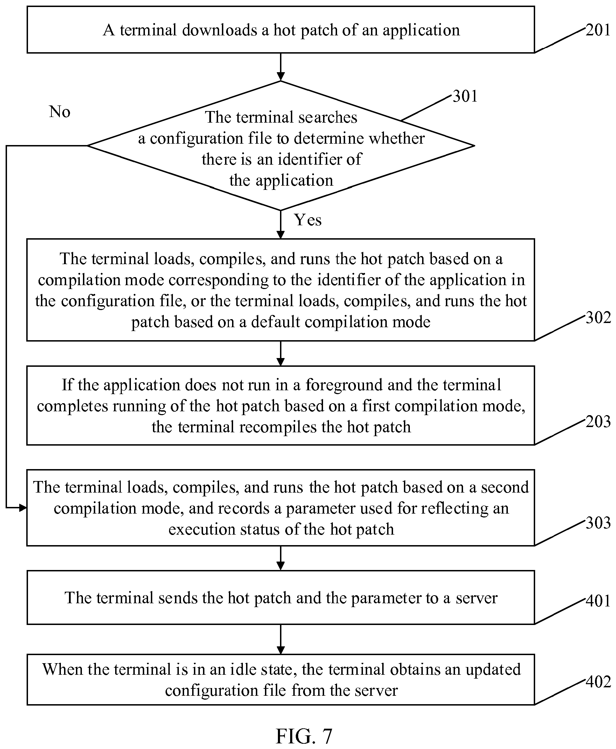

To update the configuration file, in a possible implementation of this embodiment of the present invention, the terminal needs to send the recorded parameter and the hot patch to a server, and obtains an updated configuration file from the server when the terminal is in an idle state. Therefore, based on the implementation shown in FIG. 6, an implementation shown in FIG. 7 may be further implemented. After the terminal loads, compiles, and runs the hot patch based on the second compilation mode and records the parameter used for reflecting the execution status of the hot patch in step 303, step 401 and step 402 may be further performed.

Step 401: The terminal sends the hot patch and the parameter to a server.

The terminal may periodically or non-periodically send the hot patch and the parameter to the server. When sending the hot patch and the parameter, the terminal may separately send a plurality of hot patches and parameters to the server a plurality of times, or send a plurality of hot patches and parameters to the server at a time. In this embodiment of the present invention, a time, a manner, and the like of sending the hot patch and the parameter are not limited.

Step 402: When the terminal is in an idle state, the terminal obtains an updated configuration file from the server.

The idle state indicates that the terminal has sufficient resources to complete updating of the configuration file or that running of another program in the terminal is not affected during updating of the configuration file. It can be learned that the idle state of the terminal may include a running status in which an idle resource in the terminal is higher than a resource threshold, and may further include a status in which a system of the terminal is in a standby state. This is not limited herein.

It should be noted that, if there is no updated configuration file in the server or that the updated configuration file does not need to be obtained in a period of time is preconfigured, the terminal does not need to update the configuration file even if the terminal is in the idle state. In addition, a time, a manner, and the like of updating the configuration file are not limited to the implementation provided in this embodiment of the present invention. An appropriate updating time may be alternatively selected based on a user requirement or a preconfigured condition.

For the server, after receiving the hot patch and the parameter that are sent by the terminal, the server may locally store a correspondence between the hot patch and the parameter, and determine, based on a parameter corresponding to a hot patch generated for a single application in a specific period of time, whether an identifier of the application needs to be added to the configuration file. For example, for a hot patch whose load time is greater than a time threshold and/or whose size is greater than a preset threshold, an identifier of an application corresponding to the hot patch may be added to the configuration file. It should be noted that, for an application corresponding to an identifier in the configuration file, the identifier of the application may be alternatively deleted from the configuration file with reference to a generated parameter.

Certainly, the server may only store the hot patch and the parameter, and a subsequent analysis and processing process may be performed by a technician. Alternatively, a corresponding execution rule is configured, and another third-party device or the server determines, according to the execution rule, to add an identifier to or delete an identifier from the configuration file. Details are not described herein.

The configuration file is updated, so that compilation modes used for different hot patches can be adjusted in a timely manner. In other words, whether the hot patches need to be compiled and run in a manner in which compilation modes are switched is determined. In this way, a probability that the terminal compiles a hot patch in a single compilation mode because an identifier of an application corresponding to the hot patch that needs to be compiled in the manner in which compilation modes are switched is not added to the configuration file in a timely manner can be reduced as much as possible. Therefore, phenomena such as black screen of the terminal and frame freezing of the application are reduced as much as possible. Certainly, a probability that the terminal needs to compile a same hot patch a plurality of times because an identifier of an application corresponding to the hot patch that needs to be compiled in a single compilation mode is not deleted from the configuration file in a timely manner is reduced, thereby avoiding additional resource waste.

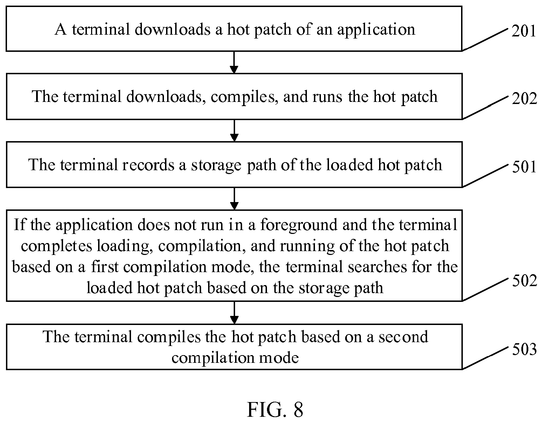

In consideration of a case in which two compilation processes may be performed on a hot patch executed by using this embodiment of the present invention, a storage path of the hot patch needs to be recorded after the hot patch is loaded, so that the terminal can successfully obtain the loaded hot patch when compiling the hot patch for a second time. Therefore, based on the implementations shown in FIG. 5 to FIG. 7 such as the implementation shown in FIG. 5, an implementation shown in FIG. 8 may be further implemented. Before the terminal recompiles the hot patch if the application does not run in the foreground and the terminal completes loading, compilation, and running of the hot patch based on the first compilation mode in step 203, step 501 may be further performed, and step 203 may be implemented as step 502 and step 503.

Step 501: The terminal records a storage path of the loaded hot patch.

Step 502: If the application does not run in a foreground and the terminal completes loading, compilation, and running of the hot patch based on the first compilation mode, the terminal searches for the loaded hot patch based on the storage path.

It can be learned that if the application does not run in the foreground, but the terminal still does not complete operations of loading, compilation, and running of the hot patch based on the first compilation mode, the terminal needs to complete the foregoing operations before searching for the loaded hot patch based on the storage path. In this case, the loaded hot patch is compiled twice.

Step 503: The terminal compiles the hot patch based on a second compilation mode.

It should be noted that, after the hot patch is compiled in the second compilation mode, the terminal may directly run the compiled hot patch, or may run the compiled hot patch after the application is switched to a foreground running state.

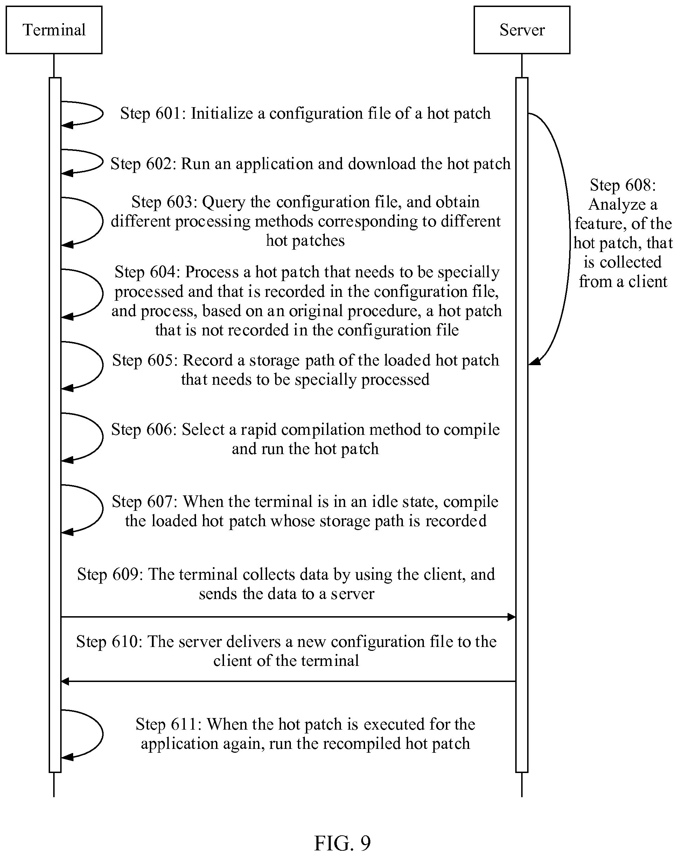

FIG. 9 shows a possible implementation process of executing a hot patch between the terminal and the server shown in FIG. 2.

Step 601: Initialize a configuration file of a hot patch.

An initialization process may be considered as a process in which a terminal obtains the configuration file from a cloud or a device such as the terminal or a server.

Step 602: Run an application and download the hot patch.

Step 603: Query the configuration file, and obtain different processing methods corresponding to different hot patches.

An identifier of an application corresponding to a hot patch that needs to be specially processed is recoded in the configuration file. Special processing refers to a process in which the hot patch needs to be processed in a manner in which compilation modes are switched.

Step 604: Process the hot patch that needs to be specially processed and that is recorded in the configuration file, and process, based on an original procedure, a hot patch that is not recorded in the configuration file.

The original procedure herein is a hot patch execution process described in the Background. In other words, the hot patch is compiled and run in a single compilation mode.

Step 605: Record a storage path of the loaded hot patch that needs to be specially processed.

Step 606: Select a rapid compilation method to compile and run the hot patch.

If a rapid compilation mode corresponding to the hot patch is recorded in the configuration file, the hot patch is directly compiled and run in the rapid compilation mode. If a rapid compilation mode corresponding to the hot patch is not recorded in the configuration file, the hot patch may be compiled and run in a default rapid compilation mode.

Step 607: When the terminal is in an idle state, compile the loaded hot patch whose storage path is recorded.

That the terminal is in an idle state means that an application corresponding to the hot patch is in a non-foreground running state.

Step 608: Analyze a feature, of the hot patch, that is collected from a client.

The feature of the hot patch refers to parameters corresponding to the hot patch, such as a size of the hot patch and a load time of the hot patch.

Step 609: The terminal collects data by using the client, and sends the data to a server.

Step 610: The server delivers a new configuration file to the client of the terminal.

Step 611: When the hot patch is executed for the application again, run the recompiled hot patch.

For example, a system of the terminal is an Android system. In this embodiment of the present invention, a compilation mode used when the hot patch is compiled and run for the application may be detected by using an Android universal command adb shell bugreport. Certainly, the foregoing detection manner is merely used as a possible implementation, and a current compilation mode of the hot patch may be detected in another manner in which the current compilation mode can be identified. Details are not described herein again.

For example, it is detected that a compilation mode used when the terminal compiles the hot patch is interpret-only (as shown below) or another rapid compilation mode:
/ data/user/0/com.xxxxxxx.mm/patch/odex/classes .dex: interpret-only

For another example, it is detected that a compilation mode used when the terminal runs the hot patch for a second time is a speed mode (as shown below):
/data/user/0/com.xxxxxxx.mm/patch/odex/classes.dex: speed

A hot patch execution apparatus may be disposed in the terminal. To implement the foregoing functions, the hot patch execution apparatus includes a corresponding hardware structure and/or a corresponding software module for executing each function. A person skilled in the art should be easily aware that, the units and algorithm steps in the examples described with reference to the embodiments disclosed in this specification may be implemented by hardware or a combination of hardware and computer software in the present invention. Whether a function is implemented by hardware or hardware driven by computer software depends on particular applications and design constraint conditions of the technical solutions. A person skilled in the art may use different methods to implement the described functions for each particular application, but it should not be considered that the implementation goes beyond the scope of the present invention.

Function modules of the hot patch execution apparatus may be obtained through division based on the method examples in the embodiments of the present invention. For example, function modules corresponding to various functions may be obtained through division, or two or more functions may be integrated into one processing module. The integrated module may be implemented in a form of hardware, or may be implemented in a form of a software functional module. It should be noted that, in this embodiment of the present invention, module division is an example, and is merely logical function division. In actual implementation, another division manner may be used.

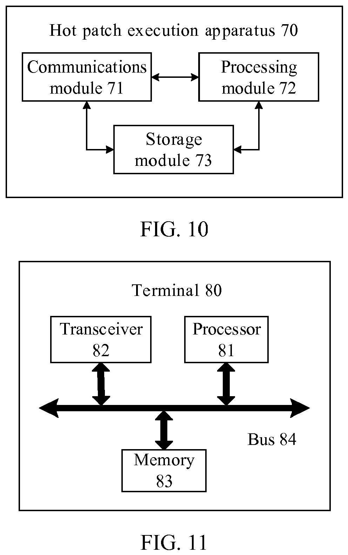

FIG. 10 is a possible schematic structural diagram of the hot patch execution apparatus in the foregoing embodiment. A hot patch execution apparatus 70 includes a communications module 71, a processing module 72, and a storage module 73. The communications module 71 is configured to support the hot patch execution apparatus 70 in preforming step 201 in FIG. 5, FIG. 6, FIG. 7, and FIG. 8 and step 401 and step 402 in FIG. 7, and is configured to support data exchange between the hot patch execution apparatus 70 and each module in a terminal, and/or support communication between the terminal and another device such as a server. The processing module 72 is configured to support the hot patch execution apparatus 70 in performing step 202 and step 203 in FIG. 5; executing a process of loading, compiling, and running the hot patch based on the second compilation mode in step 301, step 302, and step 303 in FIG. 6 and FIG. 7; performing step 202, step 502, and step 503 in FIG. 8; and/or executing another process of the technologies described in this specification. The storage module 73 is configured to support the hot patch execution apparatus 70 in executing a process of recoding the parameter used for reflecting the execution status of the hot patch in step 303 in FIG. 6, and performing step 501 in FIG. 8. In addition, the storage module 73 is configured to store program code and data of the terminal.

The processing module 72 may be implemented as a processor or a controller, for example, may be a central processing unit (Central Processing Unit, CPU), a general purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or a combination thereof. The processing module 72 can implement or execute various example logical blocks, modules, and circuits that are described with reference to the content disclosed in the present invention. Alternatively, the processor may be a combination for implementing a computing function, for example, a combination including one or more microprocessors or a combination of a DSP and a microprocessor. The communications module 71 may be implemented as a transceiver, a transceiver circuit, a communications interface, or the like. The storage module 73 may be implemented as a memory.

If the processing module 72 is implemented as a processor, the communications module 71 is implemented as a transceiver, and the storage module 73 is implemented as a memory, as shown in FIG. 11, a terminal 80 includes a processor 81, a transceiver 82, a memory 83, and a bus 84. The processor 81, the transceiver 82, and the memory 83 are interconnected by using the bus 84. The bus 84 may be a peripheral component interconnect (Peripheral Component Interconnect, PCI) bus, an extended industry standard architecture (Extended Industry Standard Architecture, EISA) bus, or the like. The buses may be classified into an address bus, a data bus, a control bus, and the like. For ease of representation, the bus is indicated by using only one bold line in FIG. 11. However, it does not indicate that there is only one bus or only one type of bus.

Methods or algorithm steps described in combination with the content disclosed in the present invention may be implemented by hardware, or may be implemented by a processor by executing a software instruction. The software instruction may include a corresponding software module. The software module may be stored in a random access memory (Random Access Memory, RAM), a flash memory, a read-only memory (Read Only Memory, ROM), an erasable programmable read-only memory (Erasable Programmable ROM, EPROM), an electrically erasable programmable read-only memory (Electrically EPROM, EEPROM), a register, a hard disk, a removable hard disk, a compact disc read-only memory (Compact Disc Read-Only Memory, CD-ROM), or a storage medium in any other form well known in the art. For example, a storage medium is coupled to a processor, so that the processor can read information from the storage medium or write information into the storage medium. Certainly, the storage medium may be a component of the processor. The processor and the storage medium may be deployed in a same device, or the processor and the storage medium may be deployed as discrete components in different devices.

A person skilled in the art should be aware that in the foregoing one or more examples, functions described in the embodiments of the present invention may be implemented by hardware, software, firmware, or any combination thereof. When the present invention is implemented by software, the foregoing functions may be stored in a computer-readable medium or transmitted as one or more instructions or code in the computer-readable medium. The computer-readable medium includes a computer storage medium and a communications medium, and the communications medium includes any medium that facilitates transmission of a computer program from one place to another. The storage medium may be any available medium accessible to a general purpose computer or a dedicated computer.

The objectives, technical solutions, and beneficial effects of the embodiments of the present invention are further described in detail in the foregoing specific implementations. It should be understood that the foregoing descriptions are merely specific implementations of the present invention.

## Claims

1. A hot patch execution method, wherein the method comprises:
downloading (201), by a terminal, a hot patch of an application, wherein the hot patch refers to some code that can fix a software vulnerability of a product software version without releasing an independent product software version separately;
loading, compiling, and running, by the terminal, the hot patch, wherein the compiling is performing format conversion of the hot patch in a first compilation mode; and
if the application does not run in a foreground and the terminal completes running of the hot patch based on the first compilation mode, recompiling (203), by the terminal, the hot patch, wherein the recompiling is performing format conversion of the hot patch in a second compilation mode;
wherein a time for compiling the hot patch based on the first compilation mode is shorter than a time for compiling the hot patch based on the second compilation mode, and a time for running the hot patch based on the first compilation mode is longer than a time for running the hot patch based on the second compilation mode;
wherein before the loading, compiling, and running, by the terminal, the hot patch, the method further comprises:
searching, by the terminal, a configuration file to determine whether there is an identifier of the application, wherein the configuration file comprises at least an identifier of an application for which a hot patch needs to be loaded, compiled, and run in a rapid compilation mode, and the first compilation mode is the rapid compilation mode; and
the loading, compiling, and running, by the terminal, the hot patch comprises:
if there is the identifier of the application in the configuration file, loading, compiling, and running, by the terminal, the hot patch based on a compilation mode corresponding to the identifier of the application in the configuration file, or loading, compiling, and running (302), by the terminal, the hot patch based on a default compilation mode;
wherein after the searching, by the terminal, a configuration file to determine whether there is an identifier of the application, the method further comprises:
if there is not the identifier of the application in the configuration file, loading, compiling, and running, by the terminal, the hot patch based on the second compilation mode, and recording a parameter used for reflecting an execution status of the hot patch;
wherein after the recording (303), by the terminal, a parameter used for reflecting an execution status of the hot patch, the method further comprises:
sending (401), by the terminal, the hot patch and the parameter to a server; and
obtaining (402), by the terminal, an updated configuration file from the server when the terminal is in an idle state.

2. The method according to claim 1, wherein the parameter comprises at least one of a size and a load time of the hot patch.

3. The method according to any one of claims 1 or 2, wherein before the recompiling, by the terminal, the hot patch, the method further comprises:
recording, by the terminal, a storage path of the loaded hot patch; and
searching, by the terminal, for the loaded hot patch based on the storage path.

4. A hot patch execution apparatus (70), wherein the apparatus comprises:
a communications module (71), configured to download a hot patch of an application, wherein the hot patch refers to some code that can fix a software vulnerability of a product software version without releasing an independent product software version separately; and
a processing module (72), configured to load, compile, and run the hot patch downloaded by the communications module, wherein the compiling is performing format conversion of the hot patch in a first compilation mode, wherein
the processing module (72) is further configured to: if the application does not run in a foreground and the processing module (72) completes running of the hot patch based on the first compilation mode, recompile the hot patch, wherein recompiling is performing format conversion of the hot patch in a second compilation mode;
wherein a time for compiling the hot patch based on the first compilation mode is shorter than a time for compiling the hot patch based on the second compilation mode, and a time for running the hot patch based on the first compilation mode is longer than a time for running the hot patch based on the second compilation mode; wherein the processing module (72) is further configured to search a configuration file to determine whether there is an identifier of the application, wherein the configuration file comprises at least an identifier of an application for which the hot patch needs to be loaded, compiled, and run in a rapid compilation mode, and the first compilation mode is the rapid compilation mode; and
the processing module (72) is further configured to: if there is the identifier of the application in the configuration file, load, compile, and run the hot patch based on a compilation mode corresponding to the identifier of the application in the configuration file, or load, compile, and run the hot patch based on a default compilation mode;
wherein the processing module (72) is further configured to: if there is not the identifier of the application in the configuration file, load, compile, and run the hot patch based on the second compilation mode; and
the apparatus (70) further comprises:
a storage module (73), configured to record a parameter used for reflecting an execution status of the hot patch;
wherein the communications module (71) is further configured to send the hot patch and the parameter to a server; and
the communications module (71) is further configured to obtain an updated configuration file from the server when a terminal is in an idle state.

5. The apparatus according to claim 4, wherein the apparatus further comprises:
a storage module (73), configured to record a storage path of the loaded hot patch, wherein
the processing module (72) is further configured to search for the loaded hot patch based on the storage path.

6. A terminal (80), wherein the terminal comprises:
a transceiver (82), configured to download a hot patch of an application, wherein the hot patch refers to some code that can fix a software vulnerability of a product software version without releasing an independent product software version separately; and
a processor (81), configured to load, compile, and run the hot patch downloaded by the transceiver (82), wherein the compiling is performing format conversion of the hot patch in a first compilation mode, wherein
the processor (81) is further configured to: if the application does not run in a foreground and the processor (81) completes running of the hot patch based on the first compilation mode, recompile the hot patch, wherein recompiling is performing format conversion of the hot patch in a second compilation mode;
wherein a time for compiling the hot patch based on the first compilation mode is shorter than a time for compiling the hot patch based on the second compilation mode, and a time for running the hot patch based on the first compilation mode is longer than a time for running the hot patch based on the second compilation mode;
wherein before the processor (81) loads, compiles, and runs the hot patch, the processor (81) is further configured to search a configuration file to determine whether there is an identifier of the application, wherein the configuration file comprises at least an identifier of an application for which the hot patch needs to be loaded, compiled, and run in a rapid compilation mode, and the first compilation mode is the rapid compilation mode; and
the processor (81) is further configured to: if there is the identifier of the application in the configuration file, load, compile, and run the hot patch based on a compilation mode corresponding to the identifier of the application in the configuration file, or load, compile, and run the hot patch based on a default compilation mode;
wherein after the processor (81) searches the configuration file to determine whether there is the identifier of the application, the processor (81) is further configured to: if there is not the identifier of the application in the configuration file, load, compile, and run the hot patch based on the second compilation mode, wherein
the terminal further comprises:
a memory (83), configured to record a parameter used for reflecting an execution status of the hot patch;
wherein after the memory (83) records the parameter used for reflecting the execution status of the hot patch, the transceiver (82) is further configured to send the hot patch and the parameter to a server; and
the transceiver (82) is further configured to obtain an updated configuration file from the server when the terminal is in an idle state.

7. A computer readable medium, wherein the computer readable medium stores a computer program, and when the computer program is loaded onto a computer and executed by the computer, the computer performs the method according to any one of claims 1 to 3.

8. A computer program product, wherein the computer program product comprises a computer program, and when the computer program is executed by a computer, the computer performs the method according to any one of claims 1 to 3.

## Patentansprüche

1. Verfahren zum Ausführen eines Hot-Patches, wobei das Verfahren Folgendes umfasst:
Herunterladen (201) durch ein Endgerät eines Hot-Patches einer Anwendung, wobei sich der Hot-Patch auf einen Code bezieht, der eine Software-Schwachstelle einer Produkt-Software-Version beheben kann, ohne eine unabhängige Produkt-Software-Version separat freizugeben;
Laden, Kompilieren und Ablaufenlassen des Hot-Patches durch das Endgerät, wobei das Kompilieren das Ausführen einer Formatumsetzung des Hot-Patches in einem ersten Kompilierungsmodus ist; und
falls die Anwendung nicht im Vordergrund läuft und das Endgerät das Ablaufenlassen des Hot-Patches basierend auf dem ersten Kompilierungsmodus fertigstellt, erneutes Kompilieren (203) des Hot-Patches durch das Endgerät, wobei das erneute Kompilieren das Ausführen einer Formatumsetzung des Hot-Patches in einem zweiten Kompilierungsmodus ist;
wobei eine Zeit zum Kompilieren des Hot-Patches basierend auf dem ersten Kompilierungsmodus kürzer ist als eine Zeit zum Kompilieren des Hot-Patches basierend auf dem zweiten Kompilierungsmodus und eine Zeit zum Ablaufenlassen des Hot-Patches basierend auf dem ersten Kompilierungsmodus länger ist als eine Zeit zum Ablaufenlassen des Hot-Patches basierend auf dem zweiten Kompilierungsmodus;
wobei das Verfahren vor dem Laden, Kompilieren und Ablaufenlassen des Hot-Patches durch das Endgerät ferner Folgendes umfasst:
Durchsuchen einer Konfigurationsdatei durch das Endgerät, um zu bestimmen, ob ein Bezeichner der Anwendung vorhanden ist, wobei die Konfigurationsdatei wenigstens einen Bezeichner einer Anwendung, für die ein Hot-Patch in einem schnellen Kompilierungsmodus geladen werden, kompiliert werden und ablaufen muss, umfasst und der erste Kompilierungsmodus der schnelle Kompilierungsmodus ist; und
wobei das Laden, Kompilieren und Ablaufenlassen des Hot-Patches durch das Endgerät Folgendes umfasst:
falls der Bezeichner der Anwendung in der Konfigurationsdatei vorhanden ist, Laden, Kompilieren und Ablaufenlassen des Hot-Patches durch das Endgerät basierend auf einem Kompilierungsmodus, der dem Bezeichner der Anwendung in der Konfigurationsdatei entspricht, oder Laden, Kompilieren und Ablaufenlassen (302) des Hot-Patches durch das Endgerät basierend auf einem Standardkompilierungsmodus;
wobei das Verfahren nach dem Durchsuchen einer Konfigurationsdatei durch das Endgerät, um zu bestimmen, ob ein Bezeichner der Anwendung vorhanden ist, ferner Folgendes umfasst:
falls der Bezeichner der Anwendung nicht in der Konfigurationsdatei vorhanden ist, Laden, Kompilieren und Ablaufenlassen des Hot-Patches durch das Endgerät basierend auf dem zweiten Kompilierungsmodus und Aufzeichnen eines Parameters, der zum Widerspiegeln eines Ausführungsstatus des Hot-Patches verwendet wird;
wobei das Verfahren nach dem Aufzeichnen (303) eines Parameters, der zum Widerspiegeln eines Ausführungsstatus des Hot-Patches verwendet wird, durch das Endgerät ferner Folgendes umfasst:
Senden (401) durch das Endgerät des Hot-Patches und des Parameters an einen Server; und
Erhalten (402) durch das Endgerät einer aktualisierten Konfigurationsdatei von dem Server, wenn das Endgerät in einem Leerlaufzustand ist.

2. Verfahren nach Anspruch 1, wobei der Parameter wenigstens eines aus einer Größe und einer Ladezeit des Hot-Patches umfasst.

3. Verfahren nach einem der Ansprüche 1 oder 2, wobei das Verfahren vor dem erneuten Kompilieren des Hot-Patches durch das Endgerät ferner Folgendes umfasst:
Aufzeichnung durch das Endgerät eines Speicherpfades des geladenen Hot-Patches; und
Suchen durch das Endgerät nach dem geladenen Hot-Patch basierend auf dem Speicherpfad.

4. Vorrichtung (70) zum Ausführen eines Hot-Patches, wobei die Vorrichtung Folgendes umfasst:
ein Kommunikationsmodul (71), das konfiguriert ist, einen Hot-Patch einer Anwendung herunterzuladen, wobei sich der Hot-Patch auf einen Code bezieht, der eine Software-Schwachstelle einer Produkt-Software-Version beheben kann, ohne eine unabhängige Produkt-Software-Version separat freizugeben; und
ein Verarbeitungsmodul (72), das konfiguriert ist, den durch das Kommunikationsmodul heruntergeladenen Hot-Patch zu laden, zu kompilieren und ablaufen zu lassen, wobei das Kompilieren das Ausführen einer Formatumsetzung des Hot-Patches in einem ersten Kompilierungsmodus ist, wobei
das Verarbeitungsmodul (72) ferner konfiguriert ist zum: falls die Anwendung nicht im Vordergrund läuft und das Verarbeitungsmodul (72) das Ablaufenlassen des Hot-Patches basierend auf dem ersten Kompilierungsmodus fertigstellt, erneutes Kompilieren des Hot-Patches, wobei das erneute Kompilieren das Ausführen von Formatumsetzung des Hot-Patches in einem zweiten Kompilierungsmodus ist;
wobei eine Zeit zum Kompilieren des Hot-Patches basierend auf dem ersten Kompilierungsmodus kürzer ist als eine Zeit zum Kompilieren des Hot-Patches basierend auf dem zweiten Kompilierungsmodus und eine Zeit zum Ablaufenlassen des Hot-Patches basierend auf dem ersten Kompilierungsmodus länger ist als eine Zeit zum Ablaufenlassen des Hot-Patches basierend auf dem zweiten Kompilierungsmodus; wobei das Verarbeitungsmodul (72) ferner konfiguriert ist, eine Konfigurationsdatei zu durchsuchen, um zu bestimmen, ob ein Bezeichner der Anwendung vorhanden ist, wobei die Konfigurationsdatei wenigstens einen Bezeichner einer Anwendung, für die der Hot-Patch in einem schnellen Kompilierungsmodus geladen werden, kompiliert werden und ablaufen muss, umfasst und der erste Kompilierungsmodus der schnelle Kompilierungsmodus ist; und
das Verarbeitungsmodul (72) ferner konfiguriert ist zum: falls der Bezeichner der Anwendung in der Konfigurationsdatei vorhanden ist, Laden, Kompilieren und Ablaufenlassen des Hot-Patches basierend auf einem Kompilierungsmodus, der dem Bezeichner der Anwendung in der Konfigurationsdatei entspricht, oder Laden,
Kompilieren und Ablaufenlassen des Hot-Patches basierend auf einem Standardkompilierungsmodus;
wobei das Verarbeitungsmodul (72) ferner konfiguriert ist zum: falls der Bezeichner der Anwendung nicht in der Konfigurationsdatei vorhanden ist, Laden, Kompilieren und Ablaufenlassen des Hot-Patches basierend auf dem zweiten Kompilierungsmodus; und
wobei die Vorrichtung (70) ferner Folgendes umfasst:
ein Speichermodul (73), das konfiguriert ist, einen Parameter, der verwendet wird, um einen Ausführungsstatus des Hot-Patches widerzuspiegeln, aufzuzeichnen;
wobei das Kommunikationsmodul (71) ferner konfiguriert ist, den Hot-Patch und den Parameter an einen Server zu senden; und
das Kommunikationsmodul (71) ferner konfiguriert ist, eine aktualisierte Konfigurationsdatei vom Server zu erhalten, wenn ein Endgerät in einem Leerlaufzustand ist.

5. Vorrichtung nach Anspruch 4, wobei die Vorrichtung ferner Folgendes umfasst:
ein Speichermodul (73), das konfiguriert ist, einen Speicherpfad des geladenen Hot-Patches aufzuzeichnen, wobei
das Verarbeitungsmodul (72) ferner konfiguriert ist, basierend auf dem Speicherpfad nach dem geladenen Hot-Patch zu suchen.

6. Endgerät (80), wobei das Endgerät Folgendes umfasst:
einen Sender/Empfänger (82), der konfiguriert ist, einen Hot-Patch einer Anwendung herunterzuladen, wobei sich der Hot-Patch auf einen Code bezieht, der eine Software-Schwachstelle einer Produkt-Software-Version beheben kann, ohne eine unabhängige Produkt-Software-Version separat freizugeben; und
einen Prozessor (81), der konfiguriert ist, den durch den Sender/Empfänger (82) heruntergeladenen Hot Patch zu laden, zu kompilieren und ablaufen zu lassen, wobei das Kompilieren das Ausführen einer Formatumsetzung des Hot-Patches in einem ersten Kompilierungsmodus ist, wobei
der Prozessor (81) ferner konfiguriert ist zum: falls die Anwendung nicht im Vordergrund läuft und der Prozessor (81) das Ablaufenlassen des Hot-Patches basierend auf dem ersten Kompilierungsmodus fertigstellt, erneuten Kompilieren des Hot-Patches, wobei das erneute Kompilieren das Ausführen einer Formatumsetzung des Hot-Patches in einem zweiten Kompilierungsmodus ist;
wobei eine Zeit zum Kompilieren des Hot-Patches basierend auf dem ersten Kompilierungsmodus kürzer ist als eine Zeit zum Kompilieren des Hot-Patches basierend auf dem zweiten Kompilierungsmodus und eine Zeit zum Ablaufenlassen des Hot-Patches basierend auf dem ersten Kompilierungsmodus länger ist als eine Zeit zum Ablaufenlassen des Hot-Patches basierend auf dem zweiten Kompilierungsmodus;
wobei der Prozessor (81) ferner konfiguriert ist, bevor der Prozessor (81) den Hot-Patch lädt, kompiliert und ablaufen lässt, eine Konfigurationsdatei zu durchsuchen, um zu bestimmen, ob ein Bezeichner der Anwendung vorhanden ist, wobei die Konfigurationsdatei wenigstens einen Bezeichner einer Anwendung, für die ein Hot-Patch in einem schnellen Kompilierungsmodus geladen werden, kompiliert werden und ablaufen muss, umfasst und der erste Kompilierungsmodus der schnelle Kompilierungsmodus ist; und
der Prozessor (81) ferner konfiguriert ist zum: falls der Bezeichner der Anwendung in der Konfigurationsdatei vorhanden ist, Laden, Kompilieren und Ablaufenlassen des Hot-Patches basierend auf einem Kompilierungsmodus, der dem Bezeichner der Anwendung in der Konfigurationsdatei entspricht, oder Laden, Kompilieren und Ablaufenlassen des Hot-Patches basierend auf einem Standardkompilierungsmodus;
wobei der Prozessor (81), nachdem der Prozessor (81) die Konfigurationsdatei durchsucht hat, um zu bestimmen, ob der Bezeichner der Anwendung vorhanden ist, ferner konfiguriert ist zum: falls der Bezeichner der Anwendung nicht in der Konfigurationsdatei vorhanden ist, Laden, Kompilieren und Ablaufenlassen des Hot-Patches basierend auf dem zweiten Kompilierungsmodus, wobei
das Endgerät ferner Folgendes umfasst:
einen Speicher (83), der konfiguriert ist, einen Parameter, der verwendet wird, um einen Ausführungsstatus des Hot-Patches widerzuspiegeln, aufzuzeichnen;
wobei der Sender/Empfänger (82), nachdem der Speicher (83) den Parameter, der zum Widerspiegeln des Ausführungsstatus des Hot-Patches verwendet wird, aufgezeichnet hat, ferner konfiguriert ist, den Hot-Patch und den Parameter an einen Server zu senden; und
der Sender/Empfänger (82) ferner konfiguriert ist, eine aktualisierte Konfigurationsdatei vom Server zu erhalten, wenn das Endgerät in einem Leerlaufzustand ist.

7. Computerlesbares Medium, wobei das computerlesbare Medium ein Computerprogramm speichert und wobei der Computer, wenn das Computerprogramm in einen Computer geladen und durch den Computer ausgeführt wird, das Verfahren nach einem der Ansprüche 1 bis 3 ausführt.

8. Computerprogrammprodukt, wobei das Computerprogrammprodukt ein Computerprogramm umfasst und wobei dann, wenn das Computerprogramm durch einen Computer ausgeführt wird, der Computer das Verfahren nach einem der Ansprüche 1 bis 3 ausführt.

## Revendications

1. Procédé d'exécution de correctif à chaud, le procédé comportant :
le téléchargement (201), par un terminal, d'un correctif à chaud d'une application, le correctif à chaud désignant du code capable de remédier à une vulnérabilité logicielle d'une version de produit logiciel sans publier séparément une version indépendante de produit logiciel ;
le chargement, la compilation et l'exécution, par le terminal, du correctif à chaud, la compilation consistant à effectuer une conversion de format du correctif à chaud dans un premier mode de compilation ; et
si l'application ne s'exécute pas en avant-plan et si le terminal achève l'exécution du correctif à chaud d'après le premier mode de compilation, la recompilation (203), par le terminal, du correctif à chaud, la recompilation consistant à effectuer une conversion de format du correctif à chaud dans un second mode de compilation ;
un temps nécessaire à la compilation du correctif à chaud d'après le premier mode de compilation étant plus court qu'un temps nécessaire à la compilation du correctif à chaud d'après le second mode de compilation, et un temps nécessaire à l'exécution du correctif à chaud d'après le premier mode de compilation étant plus long qu'un temps nécessaire à l'exécution du correctif à chaud d'après le second mode de compilation ;
le procédé comportant en outre, avant le chargement, la compilation et l'exécution, par le terminal, du correctif à chaud :
l'exploration, par le terminal, d'un fichier de configuration pour déterminer s'il existe un identifiant de l'application, le fichier de configuration comportant au moins un identifiant d'une application pour laquelle un correctif à chaud doit être chargé, compilé et exécuté dans un mode de compilation rapide, et le premier mode de compilation étant le mode de compilation rapide ; et
le chargement, la compilation et l'exécution, par le terminal, du correctif à chaud comportant :
si l'identifiant de l'application figure dans le fichier de configuration, le chargement, la compilation et l'exécution, par le terminal, du correctif à chaud d'après un mode de compilation correspondant à l'identifiant de l'application dans le fichier de configuration, ou le chargement, la compilation et l'exécution (302), par le terminal, du correctif à chaud d'après un mode de compilation par défaut ;
le procédé comportant en outre, après l'exploration, par le terminal, d'un fichier de configuration pour déterminer s'il existe un identifiant de l'application :
si l'identifiant de l'application ne figure pas dans le fichier de configuration, le chargement, la compilation et l'exécution, par le terminal, du correctif à chaud d'après le second mode de compilation, et l'enregistrement d'un paramètre utilisé pour refléter un état d'exécution du correctif à chaud ;
le procédé comportant en outre, après l'enregistrement (303), par le terminal, d'un paramètre utilisé pour refléter un état d'exécution du correctif à chaud :
l'envoi (401), par le terminal, du correctif à chaud et du paramètre à un serveur ; et
l'obtention (402), par le terminal, d'un fichier de configuration mis à jour à partir du serveur lorsque le terminal est dans un état inactif.

2. Procédé selon la revendication 1, le paramètre comportant une taille et/ou un temps de chargement du correctif à chaud.

3. Procédé selon l'une quelconque des revendications 1 ou 2, le procédé comportant en outre, avant la recompilation, par le terminal, du correctif à chaud :
l'enregistrement, par le terminal, d'un chemin de stockage du correctif à chaud chargé ; et
la recherche, par le terminal, du correctif à chaud chargé d'après le chemin de stockage.

4. Appareil (70) d'exécution de correctif à chaud, l'appareil comportant :
un module (71) de communications, configuré pour télécharger un correctif à chaud d'une application, le correctif à chaud désignant du code capable de remédier à une vulnérabilité logicielle d'une version de produit logiciel sans publier séparément une version indépendante de produit logiciel ; et
un module (72) de traitement, configuré pour charger, compiler et exécuter le correctif à chaud téléchargé par le module de communications, la compilation consistant à effectuer une conversion de format du correctif à chaud dans un premier mode de compilation,
le module (72) de traitement étant en outre configuré pour : si l'application ne s'exécute pas en avant-plan et si le module (72) de traitement achève l'exécution du correctif à chaud d'après le premier mode de compilation, recompiler le correctif à chaud, la recompilation consistant à effectuer une conversion de format du correctif à chaud dans un second mode de compilation ;
un temps nécessaire à la compilation du correctif à chaud d'après le premier mode de compilation étant plus court qu'un temps nécessaire à la compilation du correctif à chaud d'après le second mode de compilation, et un temps nécessaire à l'exécution du correctif à chaud d'après le premier mode de compilation étant plus long qu'un temps nécessaire à l'exécution du correctif à chaud d'après le second mode de compilation ;
le module (72) de traitement étant en outre configuré pour explorer un fichier de configuration afin de déterminer s'il existe un identifiant de l'application, le fichier de configuration comportant au moins un identifiant d'une application pour laquelle le correctif à chaud doit être chargé, compilé et exécuté dans un mode de compilation rapide, et le premier mode de compilation étant le mode de compilation rapide ; et
le module (72) de traitement étant en outre configuré pour : si l'identifiant de l'application figure dans le fichier de configuration, charger, compiler et exécuter le correctif à chaud d'après un mode de compilation correspondant à l'identifiant de l'application dans le fichier de configuration, ou charger, compiler et exécuter le correctif à chaud d'après un mode de compilation par défaut ;
le module (72) de traitement étant en outre configuré pour : si l'identifiant de l'application ne figure pas dans le fichier de configuration, charger, compiler et exécuter le correctif à chaud d'après le second mode de compilation ; et
l'appareil (70) comportant en outre :
un module (73) de stockage, configuré pour enregistrer un paramètre utilisé pour refléter un état d'exécution du correctif à chaud ;
le module (71) de communications étant en outre configuré pour envoyer le correctif à chaud et le paramètre à un serveur ; et
le module (71) de communications étant en outre configuré pour obtenir un fichier de configuration mis à jour à partir du serveur lorsqu'un terminal est dans un état inactif.

5. Appareil selon la revendication 4, l'appareil comportant en outre :
un module (73) de stockage, configuré pour enregistrer un chemin de stockage du correctif à chaud chargé, le module (72) de traitement étant en outre configuré pour rechercher le correctif à chaud chargé d'après le chemin de stockage.

6. Terminal (80), le terminal comportant :
un émetteur-récepteur (82), configuré pour télécharger un correctif à chaud d'une application, le correctif à chaud désignant du code capable de remédier à une vulnérabilité logicielle d'une version de produit logiciel sans publier séparément une version indépendante de produit logiciel ; et
un processeur (81), configuré pour charger, compiler et exécuter le correctif à chaud téléchargé par l'émetteur-récepteur (82), la compilation consistant à effectuer une conversion de format du correctif à chaud dans un premier mode de compilation,
le processeur (81) étant en outre configuré pour : si l'application ne s'exécute pas en avant-plan et si le processeur (81) achève l'exécution du correctif à chaud d'après le premier mode de compilation, recompiler le correctif à chaud, la recompilation consistant à effectuer une conversion de format du correctif à chaud dans un second mode de compilation ;
un temps nécessaire à la compilation du correctif à chaud d'après le premier mode de compilation étant plus court qu'un temps nécessaire à la compilation du correctif à chaud d'après le second mode de compilation, et un temps nécessaire à l'exécution du correctif à chaud d'après le premier mode de compilation étant plus long qu'un temps nécessaire à l'exécution du correctif à chaud d'après le second mode de compilation ;
avant que le processeur (81) charge, compile, et exécute le correctif à chaud, le processeur (81) étant en outre configuré pour explorer un fichier de configuration afin de déterminer s'il existe un identifiant de l'application, le fichier de configuration comportant au moins un identifiant d'une application pour laquelle le correctif à chaud doit être chargé, compilé et exécuté dans un mode de compilation rapide, et le premier mode de compilation étant le mode de compilation rapide ; et
le processeur (81) étant en outre configuré pour : si l'identifiant de l'application figure dans le fichier de configuration, charger, compiler et exécuter le correctif à chaud d'après un mode de compilation correspondant à l'identifiant de l'application dans le fichier de configuration, ou charger, compiler et exécuter le correctif à chaud d'après un mode de compilation par défaut ;
après que le processeur (81) a exploré le fichier de configuration pour déterminer s'il existe l'identifiant de l'application, le processeur (81) étant en outre configuré pour : si l'identifiant de l'application ne figure pas dans le fichier de configuration, charger, compiler et exécuter le correctif à chaud d'après le second mode de compilation,
le terminal comportant en outre :
une mémoire (83), configurée pour enregistrer un paramètre utilisé pour refléter un état d'exécution du correctif à chaud ;
après que la mémoire (83) a enregistré le paramètre utilisé pour refléter l'état d'exécution du correctif à chaud, l'émetteur-récepteur (82) étant en outre configuré pour envoyer le correctif à chaud et le paramètre à un serveur ; et
l'émetteur-récepteur (82) étant en outre configuré pour obtenir un fichier de configuration mis à jour à partir du serveur lorsque le terminal est dans un état inactif.

7. Support lisible par ordinateur, le support lisible par ordinateur conservant un programme d'ordinateur, et lorsque le programme d'ordinateur est chargé sur un ordinateur et exécuté par l'ordinateur, l'ordinateur réalisant le procédé selon l'une quelconque des revendications 1 à 3.

8. Produit de programme d'ordinateur, le produit de programme d'ordinateur comportant un programme d'ordinateur, et lorsque le programme d'ordinateur est exécuté par un ordinateur, l'ordinateur réalisant le procédé selon l'une quelconque des revendications 1 à 3.
